# EUROPEAN PATENT APPLICATION

(11) **EP 3 851 975 A1**
(43) Date of publication of application: **21.07.2021**
(21) Application number: 21151156.3
(22) Date of filing: 12.01.2021
(51) Int. Cl.: G06F 16/35, G06F 16/36

(54) **METHOD AND APPARATUS FOR GENERATING TEXT TOPICS, AND ELECTRONIC DEVICE**

(30) Priority: 14.01.2020 CN 202010039104
(71) Applicant: Beijing Baidu Netcom Science and Technology Co., Ltd., Beijing 100085 (CN)
(72) Inventor: LIU, Zhijie, Beijing, 100085 (CN); WANG, Qi, Beijing, 100085 (CN); FENG, Zhifan, Beijing, 100085 (CN); ZHANG, Yang, Beijing, 100085 (CN); ZHU, Yong, Beijing, 100085 (CN)
(74) Representative: advotec.

(57) **Abstract**

A method and an apparatus for generating a text topic, an electronic device, a storage medium, and a computer program product are disclosed. The method includes: obtaining entities included in a text to be processed by mining the entities in the text to be processed; determining each candidate entity in a knowledge graph corresponding to each entity included in the text to be processed through entity links; determining a set of core entities corresponding to the text to be processed by clustering candidate entities; determining each candidate topic included in the text to be processed based on a matching degree between each keyword in the text to be processed and each reference topic in a preset topic graph; and obtaining the topic of the text to be processed from the set of core entities and the candidate topics based on association between each core entity in the set of core entities and the text to be processed as well as association between each candidate topic and the text to be processed.

## Description

### TECHNICAL FIELD

The present application relates to a field of computer technology, particularly to a field of intelligent search technology, and a method and an apparatus for generating a text topic, an electronic device, a storage medium and a computer program product are proposed.

### BACKGROUND

In the related art, the texts are usually analyzed through a Latent Dirichlet Allocation (LDA) model to determine a text topic. The LDA topic generation model is also called a three-layer Bayesian probability model, which contains a three-layer structure of words, topics, and documents to identify hidden topic information in a large-scale set of documents or corpus. Based on a bag-of-words model, LDA analyzes the distribution of words and the topics thereof in the text to determine the text topic.

However, this method for determining the text topic is more suitable for data of long texts, and its accuracy is low for short texts.

### SUMMARY

A method and an apparatus for generating a text topic, an electronic device, a storage medium and a computer program product are provided by the present application to solve a problem in the related art that the method for determining the text topic based on LDA is more suitable for data of long texts while its accuracy is low for short texts.

According to a first aspect of embodiments of the present application, a method for generating a text topic includes: obtaining entities included in a text to be processed by mining the entities in the text to be processed; determining each candidate entity in a knowledge graph corresponding to each entity included in the text to be processed through entity links; determining a set of core entities corresponding to the text to be processed by clustering candidate entities based on correlation between each candidate entity in the knowledge graph and other entities; determining each candidate topic included in the text to be processed based on a matching degree between each keyword in the text to be processed and each reference topic in a preset topic graph; and obtaining the topic of the text to be processed from the set of core entities and the candidate topics based on association between each core entity in the set of core entities and the text to be processed as well as association between each candidate topic and the text to be processed.

According to a second aspect of embodiments of the present application, an apparatus for generating a text topic includes: a first obtaining module, configured to obtain entities included in a text to be processed by mining the entities in the text to be processed; a first determining module, configured to determine each candidate entity in a knowledge graph corresponding to each entity included in the text to be processed through entity links; a second determining module, configured to determine a set of core entities corresponding to the text to be processed by clustering candidate entities based on association between each candidate entity in the knowledge graph and other entities; a third determining module, configured to determine each candidate topic included in the text to be processed based on a matching degree between each keyword in the text to be processed and each reference topic in a preset topic graph; and a second obtaining module, configured to obtain the topic of the text to be processed from the set of core entities and the candidate topics based on association between each core entity in the set of core entities and the text to be processed as well as association between each candidate topic and the text to be processed.

According to a third aspect of embodiments of the present application, an electronic device includes: at least one processor; and a memory communicatively coupled to the at least one processor. The memory is configured to store instructions executable by the at least one processor. When the instructions are executed by the at least one processor, the at least one processor is configured to execute a method for generating a text topic according to the first aspect of the present application.

According to a fourth aspect of embodiments of the present application, a non-transitory computer-readable storage medium having computer instructions stored thereon is provided. The computer instructions are configured to cause a computer to execute a method for generating a text topic according to the first aspect of the present application.

According to a fifth aspect of embodiments of the present application, a computer program product is provided. When instructions in the computer program product are executed by a processor, a method for generating a text topic according to the first aspect of the present application is implemented.

Hereafter, other effects achieved by the above alternative implementation will be explained in combination with the specific embodiments.

### BRIEF DESCRIPTION OF THE DRAWINGS

The drawings are used to better understand this solution, and do not constitute a limitation to the present application, wherein:
FIG. 1 is a schematic flowchart of a method for generating a text topic according to an embodiment of the present application;
FIG. 2 is a schematic diagram of a correlation network including candidate entities according to an embodiment of the present application;
FIG. 3 is a schematic diagram of a network structure with a binary classification network model according to an embodiment of the present application;
FIG. 4 is a schematic flowchart of another method for generating a text topic according to an embodiment of the present application;
FIG. 5 is a schematic flowchart of yet another method for generating a text topic according to an embodiment of the present application;
FIG. 6 is a schematic flowchart of still yet another method for generating a text topic according to an embodiment of the present application;
FIG. 7 is a structural schematic flowchart of an apparatus for generating a text topic according to an embodiment of the present application;
FIG. 8 is block diagram of an electronic device of an embodiment of the present application.

### DETAILED DESCRIPTION

Description will be made below to example embodiments of the present application in conjunction with accompanying drawings, which includes various details of embodiments of the present application to facilitate understanding and should be regarded as merely examples. Therefore, it should be recognized for the skilled in the art that various changes and modifications may be made to the embodiments described herein without departing from the scope and spirit of the present application. Meanwhile, for clarity and conciseness, descriptions for well-known functions and structures are omitted in the following description.

For the problem in the related art that the method for determining the text topic based on LDA is more suitable for data of long texts while its accuracy is low for short texts, the embodiments of the present application provide a method for generating a text topic.

The method and apparatus for generating a text topic, and an electronic device according to the present application will be described in detail below with reference to the accompanying drawings.

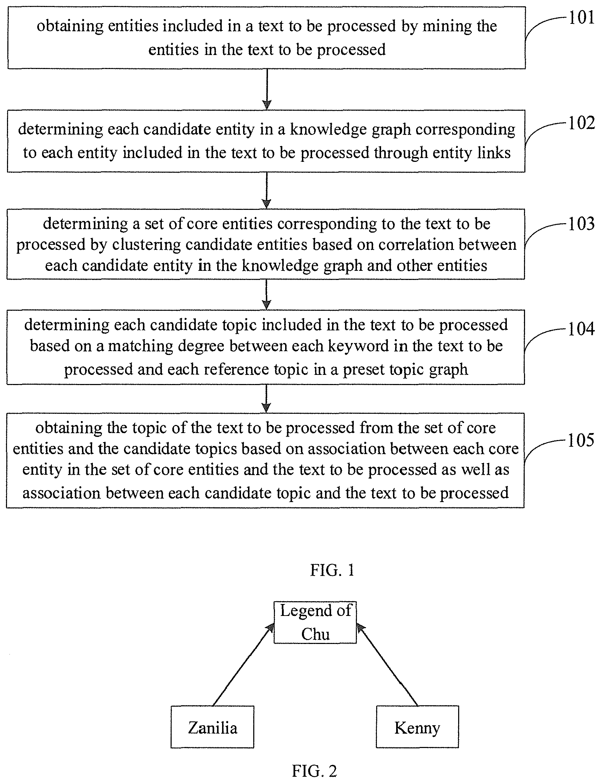

The method for generating a text topic according to the embodiment of the present application will be described in detail below with reference to FIG. 1.

FIG. 1 is a schematic flowchart of a method for generating a text topic according to the embodiment of the application.

As shown in FIG. 1, the method for generating the topic includes the following steps:
At step 101, entities included in a text to be processed are obtained by mining the entities in the text to be processed.

The text to be processed refers to text data that need to be currently processed, which may be short texts such as short sentences and titles, or long texts such as articles, which are not limited in the embodiments of the present application.

It should be noted that the text to be processed may be any text data. In actual use, the application scenarios of the method for generating the topic according to the embodiment of the present application are different, and the method and type for obtaining the text to be processed may also be different. For example, when the method for generating the topic according to the embodiment of the present application is applied to a search system, the text to be processed may be a search term entered by a user, a network resource in the system that needs to be classified or its topic is determined, and so on.

In the embodiment of the present application, performing entity mining on the text to be processed may include, performing word segmentation on the text to be processed to determine each word segment included in the text to be processed, and identifying the word segments included in the text to be processed one by one to determine whether each word segment included in the processed text is an entity included in a knowledge graph. If so, the word segment is determined as the entity included in the text to be processed; otherwise, the word segment is discarded.

Alternatively, identifying the word segments included in the text to be processed may include, identifying part of speech of each word segment in the text to be processed, and determining whether each word segment belongs to the entity based on the part of speech of each word segment. Specifically, a word segment with a part of speech being a noun may be determined as an entity included in the text to be processed. For example, persons, times, locations, names of objects, names of works, names of animals and plants, etc. may all be determined as entities included in the text to be processed.

For example, in case that the text to be processed is assumed to be "TV drama 'Legend of Chu' ends with its final episode, a Spy War starring Zanilia and Kenny, getting a sea of fans with good looks and excellent acting skills", word segmentation is performed on this text to be processed. Word segments included in the text to be processed may be determined to be TV drama, Legend of Chu, final episode, end, Zanilia, Kenny, starring, a Spy War, looks, acting skills, and getting a sea of fans. Based on the part of speech, it may be determined that the entities included in the text to be processed may be TV drama, Legend of Chu, final episode, Zanilia, Kenny, looks, and acting skills

It should be noted that the above examples are only exemplary and cannot be regarded as a limitation to the application. In actual use, the method for determining the entities included in the text to be processed may be selected according to actual needs and specific application scenarios, which is not limited in the embodiment of the present application.

At Step 102, it is determined each candidate entity in a knowledge graph corresponding to each entity included in the text to be processed through entity links.

The knowledge graph is an important part of artificial intelligence technology, which describes concepts, entities and the relationships thereof in the objective world in a structured manner. The knowledge graph provides a kind of ability to better organize, manage and understand massive information on the Internet and express the information on the Internet in a form closer to the human cognitive world. Therefore, a knowledge base is established with semantic processing capabilities and open interconnection capabilities, which may regenerate application value in intelligent information services such as intelligent searches, intelligent questioning and answering, and personalized recommendation. The knowledge graph in the embodiment of the present application may be a general one or may be constructed in advance according to specific application requirements. Each entity in the knowledge graph according to the embodiment of the present application has a unique entity identity number (shorted as ID), so that the entities in the knowledge graph may be identified with the entity ID.

The entity link refers to a process for determining the entity ID corresponding to each entity included in the text to be processed in the knowledge graph.

The candidate entity refers to the entity included in the text to be processed and with a corresponding entity ID in the knowledge graph.

In the embodiment of the present application, after the entities included in the text to be processed are determined, the rich knowledge graph data may be fully utilized. The identification model may be trained with knowledge enhancement technology, and the entities included in the text to be processed may be identified to determine whether the knowledge graph includes each entity included in the text to be processed. When an entity is included in the knowledge graph, the entity ID of the entity is obtained based on the context of the text to be processed. That is, the entity is linked to a unique entity ID in the knowledge graph, so as to determine the candidate entities corresponding to the entities included in the text to be processed.

For example, if the text to be processed is "Apple phone", for the entity "Apple" included in the text to be processed, it may be determined through entity links that the entity ID corresponding to this entity is the entity ID corresponding to the mobile phone brand "Apple" rather than the entity ID corresponding to the fruit "apple".

For another example, in case that the text to be processed is assumed to be "TV drama 'Legend of Chu' ends with its final episode, a Spy War starring Zanilia and Kenny, getting a sea of fans with good looks and excellent acting skills", the entities included in the text to be processed may be TV drama, Legend of Chu, final episode, Zanilia, Kenny, looks, and acting skills. Some entities not included in the knowledge graph may be removed through entity links, and the entity ID corresponding to each entity included in the knowledge graph may be determined. Finally, the candidate entities are determined as "Legend of Chu, Zanilia and Kenny".

At Step 103, a set of core entities corresponding to the text to be processed is determined by clustering candidate entities based on correlation between each candidate entity in the knowledge graph and other entities.

The set of core entities refers to a set of entities that is selected from the candidate entities corresponding to the text to be processed and may summarize key information of the text to be processed to a certain extent.

It should be noted that entities in the knowledge graph do not exist in isolation. Each entity in the knowledge graph is related to one or more entities. The knowledge graph may be regarded as a knowledge base with a large number of triples containing "entity-relation-entity".

In the embodiment of the present application, not all entities may express the key information of the text to be processed when there are many candidate entities, since there may be multiple candidate entities corresponding to the text to be processed. The redundant candidate entities may be removed based on the correlation between each candidate entity in the knowledge graph and other entities. The set of core entities corresponding to the text to be processed is constructed by use of the entities that may summarize the key information of the text to be processed.

Specifically, a correlation network including the candidate entities may be constructed based on the correlation between each candidate entity in the knowledge graph and other entities. The set of core entities corresponding to the text to be processed is determined based on the constructed correlation network.

That is, in a possible implementation of the embodiment of the present application, the foregoing step 103 may include constructing a correlation network including the candidate entities based on the correlation between each candidate entity in the knowledge graph and other entities. Each node in the correlation network corresponds to one candidate entity, and a direction of an edge between two nodes represents a hierarchical relationship between the two nodes.

The foregoing step 103 may also include determining the set of core entities corresponding to the text to be processed by clustering the candidate entities based on directions of edges between the candidate entities.

In the embodiment of the present application, when constructing a correlation network including each candidate entity, a node in the correlation network may be used to represent a candidate entity, an edge between two nodes in the correlation network may be used to represent the correlation between two nodes, and a direction of an edge between two nodes may be used to represent a hierarchical relationship between two nodes. Alternatively, for two nodes correlated, the node pointed by the direction of the edge between the two nodes may be used as an upper node. That is, the node pointed by the direction of the edge has a level higher than that of the other node.

For example, based on the correlation between the entities in the knowledge graph, the entity "Yao Ming" is correlated with the entity "Rocket". In the constructed correlation network, the direction of the edge between the node corresponding to the entity "Yao Ming" and the node corresponding to the entity "Rocket" points to the node corresponding to the entity "Rocket", and it may be determined that the level of the entity "Rocket" is higher than the level of the entity "Yao Ming".

As a possible implementation, when clustering candidate entities based on the correlation network including the candidate entities, each candidate entity with a highest level in the correlation network may be determined as a core entity, so as to construct the set of core entities corresponding to the text to be processed.

For example, the candidate entities corresponding to the text to be processed are "Legend of Chu, Zanilia and Kenny". Since Zanilia and Kenny are both actors in the TV drama "Legend of Chu", the correlation network shown in FIG. 2 is constructed based on the correlation between each candidate entity in the knowledge graph and other entities, in which the node corresponding to the candidate entity "Legend of Chu" is a node with the highest level in the correlation network. The set of core entities corresponding to this text to be processed may be determined as "Legend of Chu".

At Step 104, each candidate topic included in the text to be processed is determined based on a matching degree between each keyword in the text to be processed and each reference topic in a preset topic graph.

Each keyword in the text to be processed refers to a word segment that is selected from the word segments included in the text to be processed after performing word segmentation on the text to be processed and may express the key information of the text to be processed. For example, the text to be processed is "TV drama Legend of Chu' ends with its final episode, a Spy War starring Zanilia and Kenny, getting a sea of fans with good looks and excellent acting skills" and its keywords may include "Legend of Chu, final episode, Zanilia and Kenny". In this embodiment of the application, a keyword matching technology may be used to determine each keyword in the text to be processed.

The preset topic graph refers to a preset knowledge base which includes topics and hierarchical relationships between the topics. Alternatively, the preset topic graph may be a general topic graph constructed based on massive data in the Internet, or may be a dedicated topic graph constructed based on specific application scenarios and using data from fields related to the application scenarios.

The reference topics refer to the topics included in the preset topic graph.

The matching degrees between the keywords and the reference topics may refer to the degrees of similarity between the keywords and the reference topics. For example, the cosine similarity between the keyword and the reference topic may be determined as the matching degree between the keyword and the reference topic, which is not limited in the embodiment of the present application.

The candidate topic included in the text to be processed refers to a reference topic whose matching degree with the keywords in the text to be processed meets a preset condition. Alternatively, the preset condition may be "the matching degree between the candidate topic and at least one keyword in the text to be processed is greater than a threshold of matching degree". In actual use, the preset condition that the candidate topic needs to meet may be selected according to actual needs, which is not limited in the embodiment of the present application.

In the embodiment of the present application, since the implicit topic information included in the text to be processed may be mined based on the knowledge graph. In order to further improve the accuracy of generating the text topic, it is also possible to mine the topic information that appear in the text to be processed based on the keywords included in the text to be processed. Therefore, in the embodiment of the present application, each keyword included in the text to be processed may also be obtained. Based on the matching degrees between keywords and each reference topic in the preset topic graph, the reference topic whose matching degree with the keywords meets the preset condition is determined as the candidate topic included in the text to be processed.

For example, the preset condition is "the matching degree between the candidate topic and at least one keyword in the text to be processed is greater than 0.9" and the text to be processed is "Taiwanese songs, Chen Baitan, Taste of Life, looking back at life is sweet". The keywords in the text to be processed are determined as "Taiwanese songs" and "Chen Baitan" with the word matching technology. The matching degrees for the keyword "Taiwanese songs" and "Chen Baitan" respectively with reference topics in the preset topic graph, are calculated. The matching degree for the keyword "Taiwanese songs" with reference topics is then determined as 1 and there are no reference topic whose matching degree for the keyword "Chen Baitan" greater than 0.9. It may be thus determined that the candidate topic included in the text to be processed is "Taiwanese songs".

At Step 105, the topic of the text to be processed is obtained from the set of core entities and the candidate topics based on association between each core entity in the set of core entities and the text to be processed as well as association between each candidate topic and the text to be processed.

The association between the core entity and the text to be processed may be measured by the correlation between the core entity and the text to be processed in terms of grammar, semantics, and context.

In the embodiment of the present application, after determining the set of core entities corresponding to the text to be processed and the candidate topics included in the text to be processed, it may be determined the association between each core entity and the text to be processed, as well as the association between each candidate topic and the text to be processed. The core entity or candidate topic with a relatively high association with the text to be processed is determined as the topic of the text to be processed.

As a possible implementation, a classification model may be trained in advance to determine the association between the core entity and the text to be processed, as well as the association between the candidate topic and the text to be processed.

That is, in a possible implementation of the embodiment of the present application, the foregoing step 105 may include determining association between each conceptual information and the text to be processed by encoding and decoding each conceptual information corresponding to the first core entity and the text to be processed respectively with a preset classification model. The first core entity includes at least two pieces of conceptual information in the knowledge graph.

The foregoing step 105 may also include determining association between the first core entity and the text to be processed based on the association between each conceptual information for the first core entity and the text to be processed.

The foregoing step 105 may also include determining whether the first core entity is the topic of the text to be processed based on the association between the first core entity and the text to be processed.

The preset classification model refers to a model trained in advance that may identify the association between two types of text information input to the model. For example, the preset classification model may be a binary classification network model, which may identify the association between the two types of text information input to the model and output identification results and the confidence thereof. Two types of identification results (i.e., "0" and "1") may be output, in which "0" indicates that there is no association between the two types of text information, and "1" indicates that there is an association between the two types of text information.

The first core entity refers to a core entity that includes at least two pieces of conceptual information in the set of core entities. In the embodiment of the present application, the knowledge graph may also include conceptual information contained in each entity. For example, the conceptual information included in the entity "Legend of Chu" may have "Female Inspirational Legendary Costume Dramas", "Mandarin TV Dramas", "Romantic TV Dramas", and "Story TV Dramas".

In the embodiment of the present application, for the first core entity including multiple conceptual information, the text to be processed and each conceptual information for the first core entity may be input into the preset classification model to determine the association between the text to be processed and each conceptual information. The association between the text to be processed and the first core entity is further determined based on the association between the text to be processed and each conceptual information.

Specifically, in case that the preset classification model is a binary classification network model, the association between the text to be processed and the first core entity may be determined to be "1" when the first core entity contains conceptual information with an association of "1". That is, it is determined that the association between the text to be processed and the first core entity is "associated". In case that the association for each conceptual information included in the first core entity is "0", the association between the text to be processed and the first core entity is determined to be "0". That is, the association between the text to be processed and the first core entity is determined to be "not associated".

Alternatively, the output of the binary classification network model includes the confidence of the recognition results. A confidence threshold may also be preset, and then the first core entity for the text to be processed is determined based on the association between the text to be processed and each conceptual information as well as the confidence threshold. For example, the first core entity may contain conceptual information with an association of "1" to the text to be processed, and the confidence that the association between the conceptual information and the text to be processed is "1" is greater than the confidence threshold, the association between the text to be processed and the first core entity is thus determined to be "1". That is, the association between the text to be processed and the first core entity is determined to be "associated".

In this embodiment of the application, in case that the association between the first core entity and the text to be processed is "associated", the first core entity may be determined as the topic of the text to be processed. In case that the association between the first core entity and the text to be processed is "not associated", the first core entity may be discarded. Similarly, the association between each core entity in the set of core entities and the text to be processed may be determined with the preset classification model, until all the core entities in the set of core entities are traversed to determine the core entities that may be served as the topic of the text to be processed.

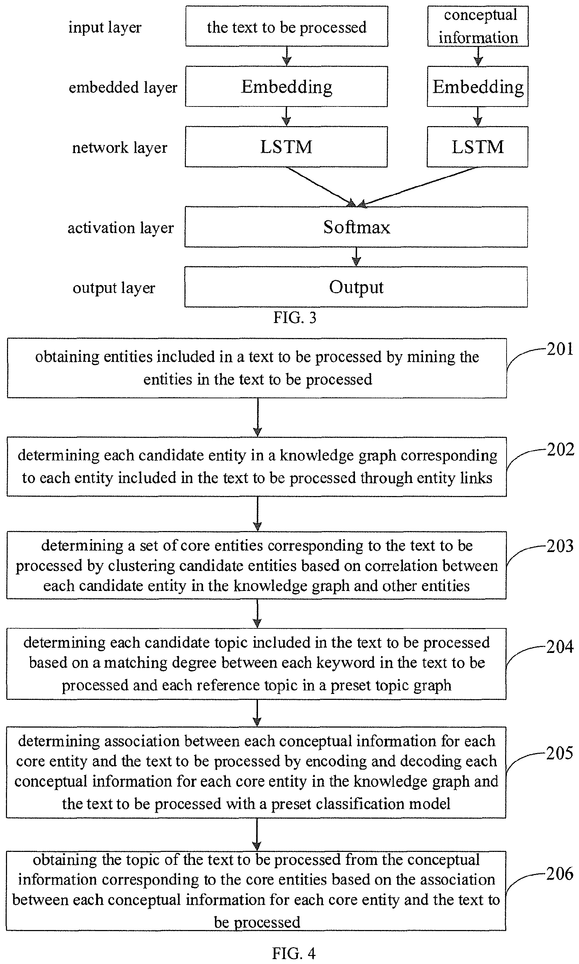

For example, the preset classification model is a binary classification network model. As shown in FIG. 3, a schematic diagram of network structure for the binary classification network model according to this embodiment of the application. It may be seen that, the binary classification network model includes an input layer, an embedded layer, a network layer, an activation layer and an output layer. The input layer contains two pieces of input information, namely the text to be processed and a piece of conceptual information for the first core entity. The embedding layer maps the words in the text to be processed and the words in the conceptual information respectively into low-dimensional vector expressions that may have semantic and grammatical information, so as to reduce the feature dimension. The long-short term memory (LSTM) network layer associates the context information in the text to be processed with that in the conceptual information, so as to extract high-dimensional information expressions both in the text to be processed and conceptual information. The activation layer merges LSTM output of the text to be processed with that of the conceptual information, obtains internal correlation between the two through parameters, and outputs after being processed by an activation function. The output space for output layer contains two labels of "0" and "1". "1" indicates that the conceptual information is associated with the text to be processed while "0" indicates that the conceptual information is not associated with the text to be processed. At the same time, the confidence of recognition results is output.

It is assumed that the confidence threshold is set to be 0.8 and the first core entity is "Legend of Chu" and the conceptual information included in the knowledge graph for the first core entity "Legend of Chu" have "Female Inspirational Legendary Costume Dramas", "Mandarin TV Dramas", "Romantic TV Dramas", and "Story TV Dramas". Each conceptual information and the text to be processed are input into the binary classification network model, to determine that, the association between the conceptual information "Female Inspirational Legendary Costume Drama" and the text to be processed is "1" with a confidence of 0.9; the association between the conceptual information "Mandarin TV Drama" and the text to be processed is "1" with a confidence of 0.7; the association between the conceptual information "Romantic TV Drama" and the text to be processed is "0" with a confidence of 0.8; the association between the conceptual information "Story TV Drama" and the text to be processed is"0" with a confidence of 0.9. Further, it may be determined that the association between the first core entity "Legend of Chu" and the text to be processed is "associated" as there is the association with a value of "1" and a confidence greater than the confidence threshold for the conceptual information "Female Inspirational Legendary Costume Drama". Thus, "Legend of Chu" may be determined as the topic of the text to be processed.

Similarly, when obtaining the topic of the text to be processed from the candidate topics included in the text to be processed, the same method may also be employed to determine whether each candidate topic may be the topic of the text to be processed. That is, a preset classification model is configured to determine the association between the text to be processed and each candidate topic, and the candidate topic whose association to the text to be processed is "associated" is determined as the topic of the text to be processed.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The topic of the text to be processed is obtained from the set of core entities and the candidate topics based on the association between each core entity in the set of core entities and the text to be processed as well as the association between each candidate topic and the text to be processed. As a result, by fusing the knowledge graph and the information for the topic graph and expanding the short text information and candidate topics, more implicit topic information is mined, which improves the accuracy of generating the text topic.

In a possible implementation of the present application, in order to further mine the implicit topic information in the text to be processed, when mining the topic information for the text to be processed through the knowledge graph, the conceptual information for the core entity may also be configured to generate the topic of the text to be processed, which further improves the accuracy of generating the text topic.

The method for generating the topic according to the embodiment of the present application will be further described below in conjunction with FIG. 4.

FIG. 4 is a schematic flowchart of another method for generating a text topic according to an embodiment of the application.

As shown in FIG. 4, the method for generating the topic includes the following steps:
At step 201, entities included in a text to be processed are obtained by mining the entities in the text to be processed.

At Step 202, it is determined each candidate entity in a knowledge graph corresponding to each entity included in the text to be processed through entity links.

At Step 203, a set of core entities corresponding to the text to be processed is determined by clustering candidate entities based on correlation between each candidate entity in the knowledge graph and other entities.

At Step 204, each candidate topic included in the text to be processed is determined based on a matching degree between each keyword in the text to be processed and each reference topic in a preset topic graph.

For the specific implementation and principles of the foregoing steps 201-204, reference may be made to the detailed description of the foregoing embodiments, which will not be repeated here.

At Step 205, association between each conceptual information for each core entity and the text to be processed is determined by encoding and decoding each conceptual information for each core entity in the knowledge graph and the text to be processed with a preset classification model.

In the embodiments of the present application, in order to fully mine the implicit topics included in the text to be processed and further improve the accuracy of generating the text topic, the conceptual information for the core entity in the knowledge graph may also be used to generate the topic of the text to be processed. Specifically, the conceptual information may be determined as the topic of the text to be processed based on the association between each conceptual information for each core entity in the knowledge graph and the text to be processed.

As a possible implementation, each conceptual information for each core entity in the knowledge graph and the text to be processed may be input into the preset classification model, so that the preset classification model may determine and output the association between each conceptual information for each core entity in the knowledge graph and the text to be processed by encoding and decoding the input conceptual information and the text to be processed.

For example, in case that the preset classification model is a binary classification network model, it may be determined that the association between the conceptual information and the text to be processed is "associated" when the identification result output by the binary classification network model is "1". It may be determined that the association between the conceptual information and the text to be processed is "not associated" when the identification result output by the binary classification network model is "0".

At Step 206, the topic of the text to be processed is obtained from the conceptual information corresponding to the core entities based on the association between each conceptual information for each core entity and the text to be processed.

In the embodiment of the present application, after the association between each conceptual information for each core entity and the text to be processed are determined, the conceptual information with a higher association to the text to be processed may be determined as the topic of the text to be processed.

Alternatively, in case that the preset classification model is a binary classification network model that may simultaneously output the associated identification results and the identification result confidence, the confidence threshold may also be preset, to obtain a conceptual information with an association of "1" and a confidence greater than the confidence threshold from all the conceptual information based on the association between each conceptual information and the text to be processed and determine this conceptual information as the topic of the text to be processed.

For example, the preset classification model is a binary classification network model, which may output the identification results for association between the input two types of text information and the confidence for the identification results. The confidence threshold is 0.8. The set of core entities corresponding to the text to be processed includes a core entity "Legend of Chu". The conceptual information for the core entity "Legend of Chu" in the knowledge graph may have "Female Inspirational Legendary Costume Dramas", "Mandarin TV Dramas", "Romantic TV Dramas", and "Story TV Dramas". Each conceptual information and the text to be processed are input into the binary classification model to determine that, the association between the conceptual information "Female Inspirational Legendary Costume Drama" and the text to be processed is "1" with a confidence of 0.9; the association between the conceptual information "Mandarin TV Drama" and the text to be processed is "1" with a confidence of 0.7; the association between the conceptual information "Romantic TV Drama" and the text to be processed is "0" with a confidence of 0.8; the association between the conceptual information "Story TV Drama" and the text to be processed is "0" with a confidence of 0.9. Further, the conceptual information "Female Inspirational Legendary Costume Drama" may be determined as the topic of the text to be processed as it has an association of "1" and a confidence greater than the confidence threshold.

It should be noted that, for the specific implementation and principle of obtaining the topic of the text to be processed from the candidate topics included in the text to be processed, reference may be made to the detailed description of the foregoing embodiments, which will not be repeated here.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The association between each conceptual information and the text to be processed are determined with a preset classification model. The topic of the text to be processed is obtained from the conceptual information corresponding to each core entity based on the association between each conceptual information and the text to be processed. As a result, by fusing the knowledge graph and the information for the topic graph and expanding the short text information and candidate topics, more implicit topic information is mined, which improves the accuracy of generating the text topic.

Therefore, by fusing the knowledge graph, the short text information is expanded by using the conceptual information for the core entity in the knowledge graph, thereby mining more implicit topic information, and further improving the accuracy of generating the text topic.

In a possible implementation of this application, in order to further mine the implicit topic information in the text to be processed, when mining the topic information of the text to be processed with the topic graph, a superordinate topic corresponding to the candidate topic may also be used to review the topic of the text to be processed, so as to further improve the accuracy of generating the text topic.

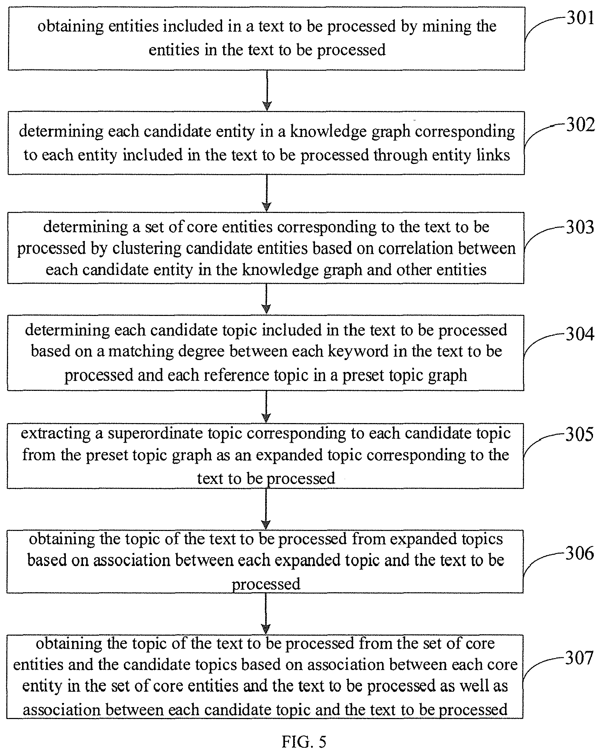

The method for generating the topic according to the embodiment of the present application will be further described below in conjunction with FIG. 5.

FIG. 5 is a schematic flowchart of yet another method for generating a text topic according to an embodiment of the application.

As shown in FIG. 5, the method for generating the text topic includes the following steps:
At step 301, entities included in a text to be processed are obtained by mining the entities in the text to be processed.

At Step 302, it is determined each candidate entity in a knowledge graph corresponding to each entity included in the text to be processed through entity links.

At Step 303, a set of core entities corresponding to the text to be processed is determined by clustering candidate entities based on correlation between each candidate entity in the knowledge graph and other entities.

At Step 304, each candidate topic included in the text to be processed is determined based on a matching degree between each keyword in the text to be processed and each reference topic in a preset topic graph.

For the specific implementation and principles of the foregoing steps 301-304, reference may be made to the detailed description of the foregoing embodiments, which will not be repeated here.

At Step 305, a superordinate topic corresponding to each candidate topic is extracted from the preset topic graph as an expanded topic corresponding to the text to be processed.

In this embodiment of the present application, the preset topic graph may include topics and hierarchical relationships between the topics. Therefore, as a possible implementation, after the candidate topics corresponding to the text to be processed are determined, the superordinate topic corresponding to each candidate topic may be extracted from the preset topic graph as an extended topic of the text to be processed based on the hierarchical relationship for each candidate topic in the preset topic graph. The implicit topic information of the text to be processed are further mined with the preset topic graph to improve the accuracy of generating the text topic.

At Step 306: the topic of the text to be processed is obtained from expanded topics based on association between each expanded topic and the text to be processed.

In the embodiment of the present application, after determining each expanded topic corresponding to the text to be processed, association between each expanded topic and the text to be processed may be determined with a preset classification model, and an expanded topic with a relatively high association to the text to be processed is determined as the topic of the text to be processed.

It should be noted that the method for determining the association between the expanded topic and the text to be processed is the same as the method for determining the association between the conceptual information for the core entity and the text to be processed. Based on the association between each expanded topic and the text to be processed, the method of obtaining the topic of the text to be processed from the extended topics is the same as the method of obtaining the topic of the text to be processed from all the conceptual information based on the association between each conceptual information and the text to be processed. The specific implementation and principle may refer to the above detailed description of the embodiments, which will not be repeated here.

At Step 307, the topic of the text to be processed is obtained from the set of core entities and the candidate topics based on association between each core entity in the set of core entities and the text to be processed as well as association between each candidate topic and the text to be processed.

For the specific implementation and principle of the foregoing step 307, reference may be made to the detailed description of the foregoing embodiments, which will not be repeated here.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The superordinate topic corresponding to each candidate topic is extracted from the preset topic graph as the expanded topic corresponding to the text to be processed. The topic of the text to be processed is obtained from expanded topics based on association between each expanded topic and the text to be processed. The topic of the text to be processed is obtained from the set of core entities and the candidate topics based on the association between each core entity in the set of core entities and the text to be processed as well as the association between each candidate topic and the text to be processed. As a result, by fusing the topic graph and expanding the topic of the text to be processed with the superordinate topic for the candidate topic in the topic graph, more implicit topic information is mined, which further improves the accuracy of generating the text topic.

In a possible implementation of this application, after the set of core entities corresponding to the text to be processed is determined, the set of core entities may be cropped based on the characteristics of the set of core entities in the knowledge graph, so that the cropped set of core entities is more consistent with the topic of the text to be processed, thereby further improving the accuracy of generating the text topic.

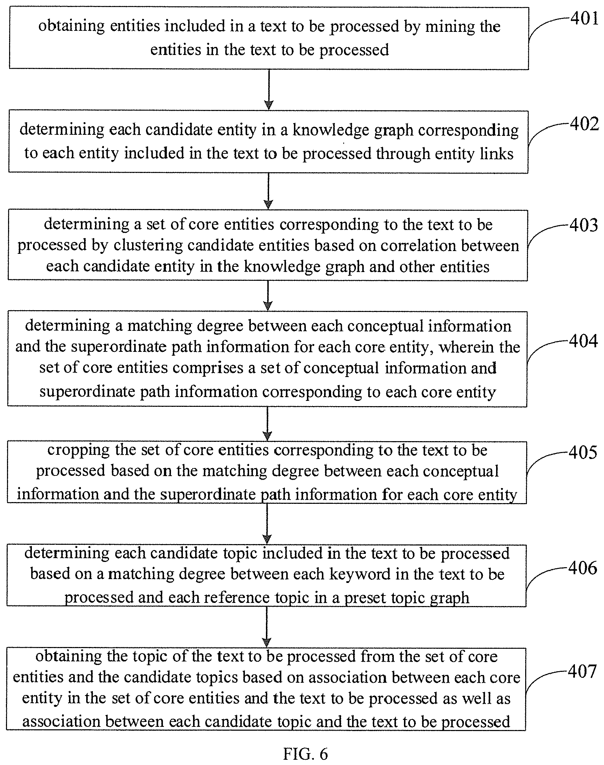

The method for generating the topic according to the embodiment of the present application will be further described below in conjunction with FIG. 6.

FIG. 6 is a schematic flowchart of yet another method for generating a text topic according to an embodiment of the application.

As shown in FIG. 6, the method for generating the topic includes the following steps:
At step 401, entities included in a text to be processed are obtained by mining the entities in the text to be processed.

At Step 402, it is determined each candidate entity in a knowledge graph corresponding to each entity included in the text to be processed through entity links.

At Step 403, a set of core entities corresponding to the text to be processed is determined by clustering candidate entities based on correlation between each candidate entity in the knowledge graph and other entities.

For the specific implementation and principles of the foregoing steps 401-403, reference may be made to the detailed description of the foregoing embodiments, which will not be repeated here.

At Step 404, it is determined that a matching degree between each conceptual information and the superordinate path information for each core entity. The set of core entities includes a set of conceptual information and superordinate path information corresponding to each core entity.

The matching degree between each conceptual information and the superordinate path information may be the degrees of similarity between the conceptual information and the superordinate path information, such as semantic similarity. For example, the cosine similarity between the conceptual information and the superordinate path information may be used to indicate the matching degree between the two.

In the embodiment of the present application, the knowledge graph may include entities along with conceptual information and superordinate path information corresponding to each entity. For example, a set of conceptual information corresponding to the entity "Legend of Chu" is "Female Inspirational Legendary Costume Dramas", "Mandarin TV Dramas", "Romantic TV Dramas", and "Story TV Dramas" and its superordinate path information is "Legend of Chu→Adapted TV Drama →Adapted Drama→Adapted Works→Work→Culture→root". The matching degree between the conceptual information of an entity in the knowledge graph and the superordinate path information may reflect the reliability of entity's information, so that the set of core entities may be cropped based on the matching degree between each conceptual information and the superordinate path information for the core entity.

Specifically, after the core entity corresponding to the text to be processed is determined, the set of conceptual information and superordinate path information corresponding to the core entity may be obtained from the knowledge graph to form the set of core entities. For each core entity in the set of core entities, the matching degree between each conceptual information in the set of conceptual information and each path information in the superordinate path information may be determined respectively.

For example, the matching degree between the conceptual information and the superordinate path information is a cosine similarity between the two. The set of core entities includes a core entity "Legend of Chu". The set of conceptual information corresponding to the core entity "Legend of Chu" is "Female Inspirational Legendary Costume Dramas", "Mandarin TV Dramas", "Romantic TV Dramas", and "Story TV Dramas" and its superordinate path information is "Legend of Chu→ Adapted TV Drama→Adapted Drama→Adapted Works→Work→Culture→Root". The respective cosine similarities for the conceptual information "Female Inspirational Legendary Costume Dramas" with the Adapted TV Drama, Adapted Drama, Adapted Works, Work, Culture and Root may be calculated, i.e., the matching degrees between the conceptual information "Female Inspirational Legendary Costume Drama" and each path information. In a same way, the matching degrees between each of the rest conceptual information in the set of conceptual information and each superordinate path information are determined in order.

At Step 405, the set of core entities corresponding to the text to be processed is cropped based on the matching degree between each conceptual information and the superordinate path information for each core entity.

In the embodiments of the present application, the core entities with a low matching degree may be removed from the set of core entities or the conceptual information corresponding to the core entities with a low matching degree may be removed based on the matching degrees between each conceptual information for each core entity and the superordinate path information, to achieve cropping on the set of core entities.

That is, in a possible implementation of the embodiment of the present application, the foregoing step 405 may include cropping the set of conceptual information for each core entity based on the matching degree between each conceptual information and the superordinate path information for each core entity.

And/or, the foregoing step 405 may include determining confidence for each core entity based on the matching degree between each conceptual information and the superordinate path information for each core entity, and cropping a number of core entities based on the confidence for each core entity.

As a possible implementation, a matching degree threshold may be preset, so that the conceptual information with matching degrees to each superordinate path information less than a matching degree threshold may be removed from the set of core entities based on the matching degrees between each conceptual information and the superordinate path information for each core entity and the matching degree threshold.

As a possible implementation, in case that the matching degree between each conceptual information and each superordinate path information for the core entity is less than the matching degree threshold, it may be determined that the core entity has a low confidence, so that this core entity is removed from the set of core entities.

For example, the set of core entities includes the core entities "Legend of Chu" and "Zanilia". The set of conceptual information corresponding to the core entity "Legend of Chu" is "Female Inspirational Legendary Costume Dramas", "Mandarin TV Dramas", "Romantic TV Dramas", and "Romantic Story" and its superordinate path information is "Legend of Chu→Adapted TV Drama →Adapted Drama→Adapted Works→Work→Culture→root". The set of conceptual information corresponding to the core entity "Zanilia" is "Actor and Female" and its superordinate path information is "Zanilia→Adapted TV Drama→Adapted Drama→Adapted Works→Work→Culture →Root". It is determined that the matching degree for the conceptual information "Female Inspirational Legendary Costume Drama" and "Adapted TV Drama" is greater than the matching degree threshold; the matching degrees for the conceptual information "Mandarin TV Drama", "Romantic TV Drama" and "Story TV Drama" with "work" are greater than the matching degree threshold, and the matching degrees for the conceptual information "Romantic Story" with any superordinate path information are less than the matching degree threshold. The conceptual information "Romantic Story" is thus removed from the set of core entities. It is determined that the matching degrees for the conceptual information "Actor and Female" corresponding to the core entity "Zanilia" with any superordinate path information are less than the matching degree threshold, the core entity "Zanilia" may be determined to have a low confidence, so that the core entity "Zanilia" may be removed from the set of core entities.

At Step 406, each candidate topic included in the text to be processed is determined based on a matching degree between each keyword in the text to be processed and each reference topic in a preset topic graph.

At Step 407, the topic of the text to be processed is obtained from the set of core entities and the candidate topics based on association between each core entity in the set of core entities and the text to be processed as well as association between each candidate topic and the text to be processed.

For the specific implementation and principles of the foregoing steps 406-407, reference may be made to the detailed description of the foregoing embodiments, which will be not repeated here.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. The matching degree between each conceptual information and the superordinate path information for each core entity is determined. The set of core entities corresponding to the text to be processed is cropped based on the matching degree between each conceptual information and the superordinate path information for each core entity. Each candidate topic included in the text to be processed is determined based on the matching degree between each keyword in the text to be processed and each reference topic in the preset topic graph. The topic of the text to be processed is obtained from the set of core entities and the candidate topics based on association between each core entity in the set of core entities and the text to be processed as well as association between each candidate topic and the text to be processed. As a result, by fusing the knowledge graph and topic graph information expanding the short text information and candidate topics, and removing the core entities with a low confidence with the knowledge graph information, not only more implicit topic information is mined, but also the confidence of implicit topics is improved, thereby further improving the accuracy of generating the text topic.

In order to implement the foregoing embodiments, the present application also provides an apparatus for generating a text topic.

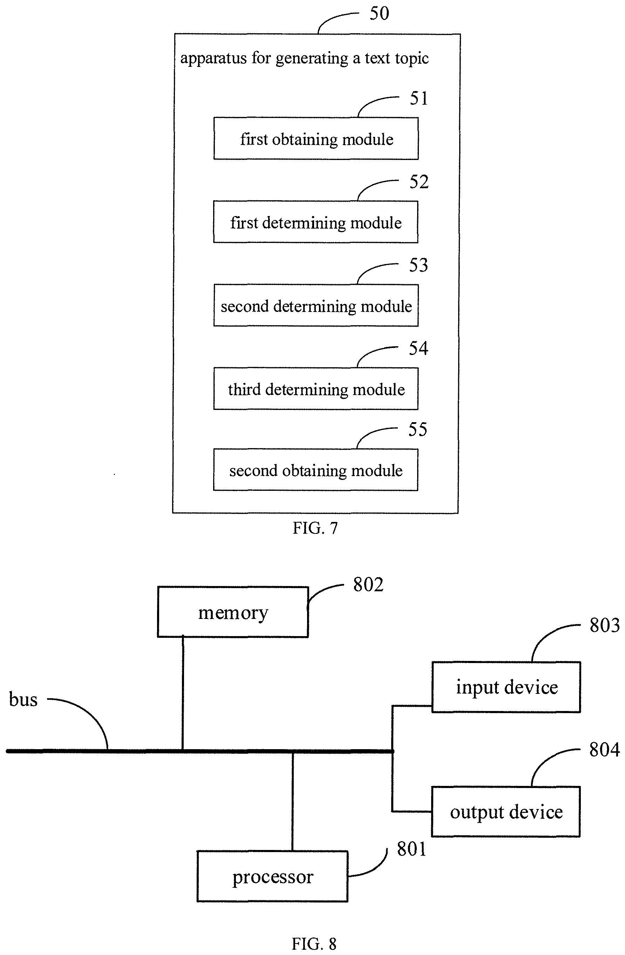

FIG. 7 is a structural schematic flowchart of an apparatus for generating a text topic according to an embodiment of the present application.

As shown in FIG. 7, the apparatus 50 for generating the text topic includes a first obtaining module 51, a first determining module 52, a second determining module 53, a third determining module 54, and a second obtaining module 55.

The first obtaining module 51 is configured to obtain entities included in a text to be processed by mining the entities in the text to be processed.

The first determining module 52 is configured to determine each candidate entity in a knowledge graph corresponding to each entity included in the text to be processed through entity links.

The second determining module 53 is configured to determine a set of core entities corresponding to the text to be processed by clustering candidate entities based on association between each candidate entity in the knowledge graph and other entities.

The third determining module 54 is configured to determine each candidate topic included in the text to be processed based on a matching degree between each keyword in the text to be processed and each reference topic in a preset topic graph.

The second obtaining module 55 is configured to obtain the topic of the text to be processed from the set of core entities and the candidate topics based on association between each core entity in the set of core entities and the text to be processed as well as association between each candidate topic and the text to be processed.

In actual use, the apparatus for generating the text topic according to the embodiment of the present application may be configured in any electronic device to execute the aforementioned method for generating the text topic.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The topic of the text to be processed is obtained from the set of core entities and the candidate topics based on the association between each core entity in the set of core entities and the text to be processed as well as the association between each candidate topic and the text to be processed. As a result, by fusing the knowledge graph and the information for the topic graph and expanding the short text information and candidate topics, more implicit topic information is mined, which improves the accuracy of generating the text topic.

In a possible implementation of the present application, the foregoing second determining module 53 is specifically configured to construct a correlation network including the candidate entities based on the correlation between each candidate entity in the knowledge graph and other entities. Each node in the correlation network corresponds to one candidate entity, and a direction of an edge between two nodes represents a hierarchical relationship between the two nodes.

The foregoing second determining module 53 is specifically configured to determine the set of core entities corresponding to the text to be processed by clustering the candidate entities based on directions of edges between the candidate entities.

Further, in another possible implementation of the present application, the foregoing the set of core entities includes a set of conceptual information and superordinate path information corresponding to each core entity. Correspondingly, the foregoing apparatus for generating the text topic 50 further includes a fourth determining module and a cropping module.

The fourth determining module is configured to determine a matching degree between each conceptual information and the superordinate path information for each core entity.

The cropping module is configured to crop the set of core entities corresponding to the text to be processed based on the matching degree between each conceptual information and the superordinate path information for each core entity.

Further, in another possible implementation of the present application, the foregoing cropping module is specifically configured to crop the set of conceptual information for each core entity based on the matching degree between each conceptual information and the superordinate path information for each core entity.

And/or, the foregoing cropping module is specifically configured to determine confidence for each core entity based on the matching degree between each conceptual information and the superordinate path information for each core entity, and crop a number of core entities based on the confidence for each core entity.

Further, in another possible implementation of the present application, the foregoing apparatus for generating the text topic 50 further includes an extracting module and a third obtaining module.

The extracting module is configured to extract a superordinate topic corresponding to each candidate topic from the preset topic graph as an expanded topic corresponding to the text to be processed.

The third obtaining module is configured to obtain the topic of the text to be processed from expanded topics based on association between each expanded topic and the text to be processed.

Further, in another possible implementation of the present application, the first core entity includes at least two pieces of conceptual information in the knowledge graph.

Correspondingly, the foregoing second obtaining module 55 is specifically configured to determine association between each conceptual information and the text to be processed by encoding and decoding each conceptual information corresponding to the first core entity and the text to be processed respectively with a preset classification model.

The foregoing second obtaining module 55 is specifically configured to determine association between the first core entity and the text to be processed based on the association between each conceptual information for the first core entity and the text to be processed.

The foregoing second obtaining module 55 is specifically configured to determine whether the first core entity is the topic of the text to be processed based on the association between the first core entity and the text to be processed.

Further, in another possible implementation of the present application, the foregoing apparatus for generating the text topic 50 further includes a fifth determining module.

The fifth determining module is configured to determine the association between each conceptual information for each core entity and the text to be processed by encoding and decoding each conceptual information for each core entity in the knowledge graph and the text to be processed with a preset classification model.

The second obtaining module 55 is further configured to obtain the topic of the text to be processed from the conceptual information corresponding to the core entities based on the association between each conceptual information for each core entity and the text to be processed.

It should be noted that the foregoing explanations of the method embodiments of generating the text topic shown in FIGS. 1, 4-5, and 6 are also applicable to the apparatus 50 for generating the text topic in this embodiment, which will not be repeated here.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The association between each conceptual information and the text to be processed are determined with a preset classification model. The topic of the text to be processed is obtained from the conceptual information corresponding to each core entity based on the association between each conceptual information and the text to be processed. As a result, by fusing the knowledge graph and the information for the topic graph and expanding the short text information and candidate topics, more implicit topic information is mined, which improves the accuracy of generating the text topic.

According to the embodiments of the present application, the present application also provides an electronic device and a readable storage medium.

As shown in FIG. 8, it is a block diagram of an electronic device capable of implementing a method for generating a text topic according to an embodiment of the present application. The electronic device aims to represent various forms of digital computers, such as a laptop computer, a desktop computer, a workstation, a personal digital assistant, a server, a blade server, a mainframe computer and other suitable computers. The electronic device may also represent various forms of mobile devices, such as a personal digital processing, a cellular phone, a smart phone, a wearable device and other similar computing devices. The components, connections and relationships of the components, and functions of the components illustrated herein are merely examples, and are not intended to limit the implementation of the present application described and/or claimed herein.

As shown in FIG. 8, the electronic device includes: one or more processors 801, a memory 802, and interfaces for connecting various components, including a high-speed interface and a low-speed interface. Various components are connected to each other by different buses, and may be mounted on a common main board or mounted in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each electronic device provides some necessary operations (for example, as a server array, a group of blade servers, or a multiprocessor system). In FIG. 8, a processor 801 is taken as an example.

The memory 802 is a non-transitory computer readable storage medium according to the present application. The memory 802 is configured to store instructions executable by at least one processor, to enable the at least one processor to execute a method for generating a text topic according to the present application. The non-transitory computer readable storage medium according to the present application is configured to store computer instructions. The computer instructions are configured to enable a computer to execute the method for generating the text topic according to the present application.

As the non-transitory computer readable storage medium, the memory 802 may be configured to store non-transitory software programs, non-transitory computer executable programs and modules, such as program instructions/modules (such as, the first obtaining module 51, the first determining module 52, the second determining module 53, the third determining module 54, and the second obtaining module 55 as illustrated in FIG. 7) corresponding to the method for generating the text topic according to embodiments of the present application. The processor 801 executes various functional applications and data processing of the server by operating non-transitory software programs, instructions and modules stored in the memory 802, that is, implements the method for generating the text topic according to the above method embodiment.

The memory 802 may include a storage program region and a storage data region. The storage program region may store an application required by an operating system and at least one function. The storage data region may store data created according to usage of the electronic device for generating a text topic. In addition, the memory 802 may include a high-speed random access memory, and may also include a non-transitory memory, such as at least one disk memory device, a flash memory device, or other non-transitory solid-state memory devices. In some embodiments, the memory 802 may optionally include memories remotely located to the processor 801, and these remote memories may be connected to the electronic device capable of implementing the method for generating the text topic via a network. Examples of the above network include, but are not limited to, the Internet, an intranet, a local area network, a mobile communication network and combinations thereof.

The electronic device capable of implementing the method for generating the text topic may also include: an input device 803 and an output device 804. The processor 801, the memory 802, the input device 803, and the output device 804 may be connected through a bus or in other means. In FIG. 8, the bus is taken as an example.

The input device 803 may receive inputted digital or character information, and generate key signal input related to user setting and function control of the electronic device capable of generating the text topic, such as a touch screen, a keypad, a mouse, a track pad, a touch pad, an indicator stick, one or more mouse buttons, a trackball, a joystick and other input device. The output device 804 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit the data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

According to the technical solution of the embodiment of the present application, it is determined each candidate entity in the knowledge graph corresponding to each entity included in the text to be processed through entity links. The set of core entities corresponding to the text to be processed is determined by clustering candidate entities based on correlation between each candidate entity in the knowledge graph and other entities. Each candidate topic included in the text to be processed is determined based on the matching degree between each keyword in the text to be processed and each reference topic in the preset topic graph. The topic of the text to be processed is obtained from the set of core entities and the candidate topics based on the association between each core entity in the set of core entities and the text to be processed as well as the association between each candidate topic and the text to be processed. As a result, by fusing the knowledge graph and the information for the topic graph and expanding the short text information and candidate topics, more implicit topic information is mined, which improves the accuracy of generating the text topic.

It should be understood that, steps may be reordered, added or deleted by utilizing flows in various forms illustrated above. For example, the steps described in the present application may be executed in parallel, sequentially or in different orders, so long as desired results of the technical solution disclosed in the present application may be achieved, there is no limitation here.

The above detailed implementations do not limit the protection scope of the present application. It should be understood by the skilled in the art that various modifications, combinations, subcombinations and substitutions may be made based on design requirements and other factors. Any modification, equivalent substitution and improvement made within the spirit and the principle of the present application shall be included in the protection scope of present disclosure.

## Claims

1. A method for generating a text topic, comprising:
obtaining (101, 201, 301, 401) entities included in a text to be processed by mining the entities in the text to be processed;
determining (102, 202, 302, 402) each candidate entity in a knowledge graph corresponding to each entity included in the text to be processed through entity links;
determining (103, 203, 303, 403) a set of core entities corresponding to the text to be processed by clustering candidate entities based on correlation between each candidate entity in the knowledge graph and other entities;
determining (104,204,304,406) each candidate topic included in the text to be processed based on a matching degree between each keyword in the text to be processed and each reference topic in a preset topic graph; and
obtaining (105, 206, 307, 407) the topic of the text to be processed from the set of core entities and the candidate topics based on association between each core entity in the set of core entities and the text to be processed as well as association between each candidate topic and the text to be processed.

2. The method of claim 1, wherein clustering candidate entities based on correlations of each candidate entity in the knowledge graph with other entities comprises:
constructing a correlation network including the candidate entities based on the correlation between each candidate entity in the knowledge graph and other entities, wherein each node in the correlation network corresponds to one candidate entity, and a direction of an edge between two nodes represents a hierarchical relationship between the two nodes; and
determining the set of core entities corresponding to the text to be processed by clustering the candidate entities based on directions of edges between the candidate entities.

3. The method of claim 1 or 2, wherein the set of core entities comprises a set of conceptual information and superordinate path information corresponding to each core entity;
after determining the set of core entities corresponding to the text to be processed, the method further comprises:
determining (404) a matching degree between each conceptual information and the superordinate path information for each core entity; and
cropping (405) the set of core entities corresponding to the text to be processed based on the matching degree between each conceptual information and the superordinate path information for each core entity.

4. The method of claim 3, wherein cropping the set of core entities corresponding to the text to be processed comprises:
cropping the set of conceptual information for each core entity based on the matching degree between each conceptual information and the superordinate path information for each core entity;
and/or,
determining confidence for each core entity based on the matching degree between each conceptual information and the superordinate path information for each core entity, and cropping a number of core entities based on the confidence for each core entity.

5. The method of one of claims 1 to 4, wherein after determining each candidate topic included in the text to be processed, the method further comprises:
extracting (305) a superordinate topic corresponding to each candidate topic from the preset topic graph as an expanded topic corresponding to the text to be processed; and
obtaining (306) the topic of the text to be processed from expanded topics based on association between each expanded topic and the text to be processed.

6. The method of any one of claims 1-5, wherein a first core entity comprises at least two pieces of conceptual information in the knowledge graph;
obtaining the topic of the text to be processed from the set of core entities and candidate topics comprises:
determining (205) association between each conceptual information and the text to be processed by encoding and decoding each conceptual information corresponding to the first core entity and the text to be processed respectively with a preset classification model;
determining association between the first core entity and the text to be processed based on the association between each conceptual information for the first core entity and the text to be processed; and
determining whether the first core entity is the topic of the text to be processed based on the association between the first core entity and the text to be processed.

7. The method of any one of claims 1-6, wherein, before obtaining the topic of the text to be processed from the set of core entities and the candidate topics, the method further comprises:
determining the association between each conceptual information for each core entity and the text to be processed by encoding and decoding each conceptual information for each core entity in the knowledge graph and the text to be processed with a preset classification model;
obtaining the topic of the text to be processed from the set of core entities and the candidate topics comprises:
obtaining the topic of the text to be processed from the conceptual information corresponding to the core entities based on the association between each conceptual information for each core entity and the text to be processed.

8. An apparatus (50) for generating a text topic, comprising:
a first obtaining module (51), configured to obtain entities included in a text to be processed by mining the entities in the text to be processed;
a first determining module (52), configured to determine each candidate entity in a knowledge graph corresponding to each entity included in the text to be processed through entity links;
a second determining module (53), configured to determine a set of core entities corresponding to the text to be processed by clustering candidate entities based on correlation between each candidate entity in the knowledge graph and other entities;
a third determining module (54), configured to determine each candidate topic included in the text to be processed based on a matching degree between each keyword in the text to be processed and each reference topic in a preset topic graph; and
a second obtaining module (55), configured to obtain the topic of the text to be processed from the set of core entities and the candidate topics based on association between each core entity in the set of core entities and the text to be processed as well as association between each candidate topic and the text to be processed.

9. The apparatus of claim 8, wherein the second determining module is specifically configured to:
construct a correlation network including the candidate entities based on the correlation between each candidate entity in the knowledge graph and other entities, wherein each node in the correlation network corresponds to one candidate entity, and a direction of an edge between two nodes represents a hierarchical relationship between the two nodes; and
determine the set of core entities corresponding to the text to be processed by clustering the candidate entities based on directions of edges between the candidate entities.

10. The apparatus of claim 8 or 9, wherein the set of core entities comprises a set of conceptual information and superordinate path information corresponding to each core entity;
the apparatus further comprises:
a fourth determining module, configured to determine a matching degree between each conceptual information and the superordinate path information for each core entity; and
a cropping module, configured to crop the set of core entities corresponding to the text to be processed based on the matching degree between each conceptual information and the superordinate path information for each core entity
wherein the cropping module is specifically configured to:
crop the set of conceptual information for each core entity based on the matching degree between each conceptual information and the superordinate path information for each core entity;
and/or,
determine confidence for each core entity based on the matching degree between each conceptual information and the superordinate path information for each core entity, and crop a number of core entities based on the confidence for each core entity.

11. The apparatus of one of claims 8 to 10, further comprising:
an extracting module, configured to extract a superordinate topic corresponding to each candidate topic from the preset topic graph as an expanded topic corresponding to the text to be processed; and
a third obtaining module, configured to obtain the topic of the text to be processed from expanded topics based on association between each expanded topic and the text to be processed.

12. The apparatus of any one of claims 8-11, wherein the first core entity comprises at least two pieces of conceptual information in the knowledge graph;
the second obtaining module is specifically configured to:
determine association between each conceptual information and the text to be processed by encoding and decoding each conceptual information corresponding to the first core entity and the text to be processed respectively with a preset classification model;
determine association between the first core entity and the text to be processed based on the association between each conceptual information for the first core entity and the text to be processed; and
determine whether the first core entity is the topic of the text to be processed based on the association between the first core entity and the text to be processed;
wherein the apparatus further comprises:
a fifth determining module, configured to determine the association between each conceptual information for each core entity and the text to be processed by encoding and decoding each conceptual information for each core entity in the knowledge graph and the text to be processed with a preset classification model;
the second obtaining module is further configured to:
obtain the topic of the text to be processed from the conceptual information corresponding to the core entities based on the association between each conceptual information for each core entity and the text to be processed.

13. An electronic device, comprising:
at least one processor; and
a memory communicatively coupled to the at least one processor;
wherein the memory is configured to store instructions executable by the at least one processor, when the instructions are executed by the at least one processor, the at least one processor is configured to execute a method of any one of claims 1-7.

14. A non-transitory computer-readable storage medium having computer instructions stored thereon, wherein the computer instructions are configured to cause a computer to execute a method of any one of claims 1-7.

15. A computer program product, wherein when instructions in the computer program product are executed by a processor, a method for generating a text topic of any one of claims 1-7 is implemented.
